# EUROPEAN PATENT APPLICATION

(11) **EP 4 834 990 A1**
(43) Date of publication of application: **04.11.2026**
(21) Application number: 25382445.2
(22) Date of filing: 30.04.2025
(51) Int. Cl.: C08L 23/14

(54) **MULTILAYER FILM COMPRISING A HETEROPHASIC PROPYLENE COPOLYMER**

(71) Applicant: Borealis GmbH, 1020 Vienna (AT)
(72) Inventor: DE ESPINOLA RAMIREZ, Fernando, 08008 Barcelona (ES); NIEDERSÜß, Peter, 4021 Linz (AT); ORTNER, Stefan, 4021 Linz (AT); WANG, Jingbo, 4021 Linz (AT)
(74) Representative: Maiwald GmbH

(57) **Abstract**

Heterophasic propylene copolymer suitable for film making, said heterophasic propylene copolymer has a specific melting temperature and ethylene content in the polypropylene matrix being further defined that the molecular weight of the crystalline fraction is higher than the molecular weight of the soluble fraction.

## Description

### Field of the Invention

The present invention is related to a specific heterophasic propylene copolymer as well as to a film comprising at least one layer wherein said at least one layer comprises at least 95 wt.-% of the specific heterophasic propylene copolymer according to this invention.

### Background to the Invention

Plastic packaging widely used like for instance for food packaging or medical packaging, since it can be well tailored for individual needs. However, current solutions are quite often based on multilayer structure films produced with different type of polymers, since typically a single polymer cannot offer all the required properties. One disadvantage of such solutions is that recycling of the waste becomes demanding due to complex material combinations. Therefore, mono-polypropylene structures which can replace for instance widely used oriented polyethylene terephthalate/polyethylene or oriented polyethylene terephthalate/polypropylene combinations are desired. Such polypropylenes must have improved mechanical strength compared to standard polypropylene products to avoid packaging breaks during transport. Such new solutions with improved stiffness/impact balance would not only allow providing monomaterial film layers but also allow downgauging.

A further problem of the current polypropylenes on the market for film making is that they are typically produced with 4^{th} generation Ziegler-Natta catalysts, i.e. catalysts containing phthalate derivatives as internal donor. Although the polypropylenes obtained by using 4^{th} generation catalysts normally contain only amounts of phthalates far below the accepted maximum value, customers nowadays require products which have been produced without catalysts containing phthalate derivatives.

EP 1 384 576 A1, WO 2012/084127, WO 2013/150357 describe multilayer films containing different class of polymers, like EVOH, styrene-based polymers, polyamides and polyethylene-terephthalate. In other words, all these multilayer films containing different polymers making recycling demanding.

WO 2015/117958 A1 describes a heterophasic propylene copolymer for thin wall packaging. The products described therein are very soft having stiffness measured on injection moulded specimens below the stiffness of comparative example 'CE1' of the present application. In other words, such products fail to provide a film having high stiffness.

WO 2017/198633 A1 is another application directed to soft heterophasic propylene copolymers for film making. The stiffness of such films is considerably lower than the stiffness of the inventive examples of the current application.

WO 2018/077663 A1 describes cast films based on heterophasic propylene copolymers as well. Such films are stiff, but the impact behaviour is rather low.

Therefore, there is still the need to provide a heterophasic propylene copolymer which can be used for the manufacture of a film having high stiffness and puncture resistance. Additionally, such film should have high tensile strength. Another object is that such heterophasic propylene copolymer has been produced with a catalyst system being phthalate free.

### Summary of the Invention

One finding of the present invention is to provide a heterophasic propylene copolymer having a rather high melting temperature which crystalline fraction (CF) has a higher molecular weight than the soluble fraction (SF) and further the crystalline fraction (CF) must contain a certain amount of ethylene.

Accordingly, the invention is directed to heterophasic propylene copolymer as defined in claim 1. Specific preferred embodiments thereof are described in the dependent claims. Additionally, the present invention is directed to a film comprising at least one layer comprising at least 95 wt.-% of the heterophasic polypropylene copolymer according to this invention, preferably the at least one layer consists of the heterophasic polypropylene copolymer according to this invention.

### Definitions

The term 'heterophasic propylene copolymer' according to this invention is understood in the usual sense, as known to the skilled person. That is, a heterophasic propylene copolymer comprises a polypropylene matrix which contains (finely) dispersed inclusions which are not part of the matrix and said inclusions contain a propylene-ethylene elastomeric copolymer. The term 'inclusion' indicates that the polypropylene matrix and the inclusion form different phases. Said inclusions are for instance visible by high resolution microscopy, like electron microscopy or scanning force microscopy. According to this invention, in a first approximation the crystalline fraction (CF) determined by CRYSTEX QC analysis represents the polypropylene matrix whereas the soluble fraction (SF) determined by CRYSTEX QC analysis represents the propylene-ethylene elastomeric copolymer.

According to this invention the heterophasic propylene copolymer exclusively contains units derivable from propylene and ethylene. In other words, it is especially preferred that the polymer chains of the heterophasic propylene copolymer exclusively contain units derivable from propylene and optionally ethylene.

The term 'propylene homopolymer' according to this invention defines a polymer that essentially consists of propylene monomer units. Due to impurities especially during commercial polymerization processes, a propylene homopolymer can comprise up to 0.1 wt.-% ethylene units, preferably up to 0.05 wt.-% ethylene units and most preferably up to 0.01 wt.--% ethylene units.

The term 'random ethylene-propylene copolymer' according to this invention is in contrast to the heterophasic propylene copolymer monophasic and may form the polypropylene matrix or being at least part of the polypropylene matrix. According to this invention the random ethylene-propylene copolymer exclusively contains units derivable from propylene and ethylene, whereby the far greater part are units derivable from propylene.

The term 'propylene-ethylene elastomeric copolymer' according to this invention defines the elastomeric part of the heterophasic propylene copolymer, which ethylene content is considerable higher than the ethylene content of the polypropylene matrix. According to this invention the propylene-ethylene elastomeric copolymer exclusively contains units derivable from propylene and ethylene. In a first approximation the ethylene content of the propylene-ethylene elastomeric copolymer is the ethylene content of the soluble fraction (SF) determined by CRYSTEX QC analysis of the heterophasic propylene copolymer.

### Detailed Description

The heterophasic propylene copolymer according to this invention is especially characterized by DSC and the CRYSTEX QC analysis. The crystalline fraction (CF) of the CRYSTEX QC analysis reflects the polypropylene matrix in the first approximation, whereas the soluble fraction (SF) reflects in the first approximation the elastomeric part of the heterophasic propylene copolymer. Accordingly, the heterophasic propylene copolymer according to this invention has
(a) a melting temperature (Tm), determined by differential scanning calorimetry (DSC) according to ISO 11357, in the range from 148 to 162 °C, preferably 149 to 161 °C;
(b) from 75.0 to 86.0 wt.-%, preferably from 81.0 to 85.0 wt.-%, relative to the total weight of the heterophasic propylene copolymer, of a crystalline fraction (CF), determined by CRYSTEX QC analysis;
(c) from 14.0 to 25.0 wt.-%, preferably from 15.0 to 19.0 wt.-%, relative to the total weight of the heterophasic propylene copolymer, of a soluble fraction (SF), determined by CRYSTEX QC analysis;
   wherein
(d) the crystalline fraction (CF) has an ethylene content (C2(CF)), determined by CRYSTEX QC analysis, in the range from 2.4 to 4.2 wt.-%, preferably from 3.2 to 4.0 wt.-%, and an intrinsic viscosity (iV(CF)), determined by CRYSTEX QC analysis, in the range from 1.70 to 2.20 dL/g, preferably from 1.85 to 2.15 dL/g;
(e) the soluble fraction (SF) has an ethylene content (C2(SF)), determined by CRYSTEX QC analysis, in the range from 18.0 to 29.0 wt.-%, preferably from 22.0 to 29.0wt.-%, and an intrinsic viscosity (iV(SF)), determined by CRYSTEX QC analysis, in the range from 1.10 to 1.90 dL/g, preferably from 1.15 to 1.41 dL/g; wherein further
(f) the ratio of the intrinsic viscosity (iV(SF)) to the intrinsic viscosity (iV(CF)) (iV(SF)/iV(CF)) is below 0.72, preferably in the range from 0.55 to below 0.67.

Preferably, the heterophasic propylene copolymer according to this invention has
(a) a melting temperature (Tm), determined by differential scanning calorimetry (DSC) according to ISO 11357, in the range from 148 to 162 °C, preferably 149 to 161 °C;
(b) a crystallization temperature (Tc), determined by differential scanning calorimetry (DSC) according to ISO 11357, in the range from 115 to 128 °C, preferably in the range from 116 to 127 °C;
(c) from 75.0 to 86.0 wt.-%, preferably from 81.0 to 85.0 wt.-%, relative to the total weight of the heterophasic propylene copolymer, of a crystalline fraction (CF), determined by CRYSTEX QC analysis;
(d) from 14.0 to 25.0 wt.-%, preferably from 15.0 to 19.0 wt.-%, relative to the total weight of the heterophasic propylene copolymer, of a soluble fraction (SF), determined by CRYSTEX QC analysis;
wherein
(e) the crystalline fraction (CF) has an ethylene content (C2(CF)), determined by CRYSTEX QC analysis, in the range from 2.4 to 4.2 wt.-%, preferably from 3.2 to 4.0 wt.-%, and an intrinsic viscosity (iV(CF)), determined by CRYSTEX QC analysis, in the range from 1.70 to 2.20 dL/g, preferably from 1.85 to 2.15 dL/g;
(f) the soluble fraction (SF) has an ethylene content (C2(SF)), determined by CRYSTEX QC analysis, in the range from 18.0 to 29.0 wt.-%, preferably from 22.0 to 29.0wt.-%, and an intrinsic viscosity (iV(SF)), determined by CRYSTEX QC analysis, in the range from 1.10 to 1.90 dL/g, preferably from 1.15 to 1.41 dL/g; wherein further
(g) the ratio of the intrinsic viscosity (iV(SF)) to the intrinsic viscosity (iV(CF)) (iV(SF)/iV(CF)) is below 0.72, preferably in the range from 0.55 to below 0.67.

A specific characteristic of the heterophasic propylene copolymer according to this invention is that it has a rather high melting temperature (Tm) and preferably also a rather high crystallization temperature (Tc) even though the crystalline fraction (CF) contains a considerable amount of ethylene. Accordingly, it is especially preferred that the heterophasic propylene copolymer according to this invention has
(a) a melting temperature (Tm), determined by differential scanning calorimetry (DSC) according to ISO 11357, in the range from 150 to 160 °C, preferably 150 to 158 °C, more preferably 153 to 157 °C; and
(b) the crystalline fraction (CF) has an ethylene content (C2(CF)), determined by CRYSTEX QC analysis, in the range from 3.3 to 4.0 wt.-%, preferably from 3.5 to 4.0 wt.-%, more preferably from 3.8 to 4.0 wt.-%.

Still more preferably the heterophasic propylene copolymer according to this invention has
(a) a melting temperature (Tm), determined by differential scanning calorimetry (DSC) according to ISO 11357, in the range from 150 to 160 °C, preferably 150 to 158 °C, more preferably 153 to 157 °C;
(b) a crystallization temperature (Tc), determined by differential scanning calorimetry (DSC) according to ISO 11357, in the range from 117 to 127 °C, more preferably in the range from 117 to 124 °C, more preferably in the range from 119 to 124 °C; and
(c) the crystalline fraction (CF) has an ethylene content (C2(CF)), determined by CRYSTEX QC analysis, in the range from 3.3 to 4.0 wt.-%, preferably from 3.5 to 4.0 wt.-%, more preferably from 3.8 to 4.0 wt.-%.

Therefore, the heterophasic propylene copolymer according to this invention preferably has
(a) a melting temperature (Tm), determined by differential scanning calorimetry (DSC) according to ISO 11357, in the range from 150 to 160 °C, preferably 150 to 158 °C, more preferably 153 to 157 °C;
(b) a crystallization temperature (Tc), determined by differential scanning calorimetry (DSC) according to ISO 11357, in the range from 117 to 127 °C, more preferably in the range from 117 to 124 °C, more preferably in the range from 119 to 124 °C;
(c) from 75.0 to 86.0 wt.-%, preferably from 81.0 to 85.0 wt.-%, relative to the total weight of the heterophasic propylene copolymer, of a crystalline fraction (CF), determined by CRYSTEX QC analysis;
(d) from 14.0 to 25.0 wt.-%, preferably from 15.0 to 19.0 wt.-%, relative to the total weight of the heterophasic propylene copolymer, of a soluble fraction (SF), determined by CRYSTEX QC analysis;
   wherein
(e) the crystalline fraction (CF) has an ethylene content (C2(CF)), determined by CRYSTEX QC analysis, in the range from 3.3 to 4.0 wt.-%, preferably from 3.5 to 4.0 wt.-%, more preferably from 3.8 to 4.0 wt.-%, and an intrinsic viscosity (iV(CF)), determined by CRYSTEX QC analysis, in the range from 1.70 to 2.20 dL/g, preferably from 1.85 to 2.15 dL/g;
(f) the soluble fraction (SF) has an ethylene content (C2(SF)), determined by CRYSTEX QC analysis, in the range from 18.0 to 29.0 wt.-%, preferably from 22.0 to 29.0wt.-%, and an intrinsic viscosity (iV(SF)), determined by CRYSTEX QC analysis, in the range from 1.10 to 1.90 dL/g, preferably from 1.15 to 1.80 dL/g, more preferably 1.15 to 1.70 dL/g, like from 1.20 to 1.41 dL/g;
   wherein further
(g) the ratio of the intrinsic viscosity (iV(SF)) to the intrinsic viscosity (iV(CF)) (iV(SF)/iV(CF)) is below 0.72, preferably in the range from 0.55 to below 0.67.

In addition, it is preferred that the molecular weight of the matrix is higher than the molecular weight of the rubber phase. In other words, it is preferred that the molecular weight of the crystalline fraction (CF) is higher than of the soluble fraction (SF). Therefore, it is preferred that the heterophasic propylene copolymer according to this invention has
(a) an intrinsic viscosity (iV(CF)), determined by CRYSTEX QC analysis, in the range from 1.90 to 2.10 dL/g, preferably from 1.90 to 2.05 dL/g
(b) an intrinsic viscosity (iV(SF)), determined by CRYSTEX QC analysis, in the range from 1.20 to 1.70 dL/g, preferably from 1.20 to 1.50 dL/g;
   wherein further
(c) the ratio of the intrinsic viscosity (iV(SF)) to the intrinsic viscosity (iV(CF)) (iV(SF)/iV(CF)) is in the range from 0.58 to below 0.67, preferably 0.58 to 65, more preferably 0.62 to 0.65.

Accordingly, it is especially preferred that the heterophasic propylene copolymer according to this invention has
(a) a melting temperature (Tm), determined by differential scanning calorimetry (DSC) according to ISO 11357, in the range from 150 to 160 °C, preferably 150 to 158 °C, more preferably 153 to 157 °C;
(b) a crystallization temperature (Tc), determined by differential scanning calorimetry (DSC) according to ISO 11357, in the range from 117 to 127 °C, more preferably in the range from 117 to 124 °C, more preferably in the range from 119 to 124 °C;
(c) from 75.0 to 86.0 wt.-%, preferably from 81.0 to 85.0 wt.-%, relative to the total weight of the heterophasic propylene copolymer, of a crystalline fraction (CF), determined by CRYSTEX QC analysis;
(d) from 14.0 to 25.0 wt.-%, preferably from 15.0 to 19.0 wt.-%, relative to the total weight of the heterophasic propylene copolymer, of a soluble fraction (SF), determined by CRYSTEX QC analysis;
   wherein
(e) the crystalline fraction (CF) has an ethylene content (C2(CF)), determined by CRYSTEX QC analysis, in the range from 3.3 to 4.0 wt.-%, preferably from 3.5 to 4.0 wt.-%, more preferably from 3.8 to 4.0 wt.-%, and an intrinsic viscosity (iV(CF)), determined by CRYSTEX QC analysis, in the range from 1.90 to 2.10 dL/g, preferably from 1.90 to 2.05 dL/g;
(f) the soluble fraction (SF) has an ethylene content (C2(SF)), determined by CRYSTEX QC analysis, in the range from 18.0 to 29.0 wt.-%, preferably from 22.0 to 29.0wt.-%, and an intrinsic viscosity (iV(SF)), determined by CRYSTEX QC analysis, in the range from 1.20 to 1.70 dL/g, preferably from 1.20 to 1.50 dL/g; wherein further
(g) the ratio of the intrinsic viscosity (iV(SF)) to the intrinsic viscosity (iV(CF)) (iV(SF)/iV(CF)) is from 0.58 to below 0.67, preferably 0.58 to 65, more preferably 0.62 to 0.65.

The heterophasic propylene copolymer according to this invention can be further described by the total ethylene content and/or final molecular weight.

Since the heterophasic propylene copolymer shall be at least part of one film layer it is preferred that the heterophasic propylene copolymer has a melt flow rate MFR₂ of at least 2.0, preferably in the range of 2.0 to 12 g/10min, more preferably in the range of 3.0 to 10.0 g/10min and/or an intrinsic viscosity (iV(SF)), determined by CRYSTEX QC analysis, of below 2.40 dL/g, more preferably the range from 1.3 to below 2.40 dL/g, preferably from 1.5 to 2.30 dL/g.

The total ethylene content is the result of the ethylene content of the crystalline fraction (CF) and soluble fraction (SF). Accordingly, it is preferred that the ethylene content of the heterophasic propylene copolymer is in the range of 6.0 to 10.0 wt.-%, preferably in the range of 6.5 to 8.1 wt.-%, more preferably in the range of 7.0 to 8.1 wt.-%, preferably based on the total weight of the combined amounts of the crystalline fraction (CF) and soluble fraction (SF).

It is still further preferred that the polymer chains of the heterophasic propylene copolymer exclusively contain units derivable from propylene and optionally ethylene.

As indicated above, the heterophasic propylene copolymer according to this invention comprises a polypropylene matrix in which a propylene-ethylene elastomeric copolymer is dispersed. Preferably the polypropylene matrix has an ethylene content in the range of 2.0 to 3.9 wt.-%, more preferably in the range of 2.5 to 3.9 wt.-%, still more preferably in the range of 3.2 to 3.9 wt.-%.

Preferably the polypropylene matrix is a mixture of a propylene homopolymer and a random ethylene-propylene copolymer, wherein said random ethylene-propylene copolymer has preferably an ethylene content in the range of 2.1 to 7.0 wt.-%, more preferably in the range of 2.5 to 6.0 wt.-%, like in the range of 3.2 to 5.0 wt.-%.

Further it is preferred that the molecular weight of the propylene homopolymer and the random ethylene-propylene copolymer differ to some extent. Accordingly, it is preferred that the difference in the melt flow rate MFR₂ of the propylene homopolymer and the random ethylene-propylene copolymer is at least 5 g/10min.

The weight ratio between the propylene homopolymer and the random ethylene-propylene copolymer is in the range of 3/97 to 40/60, more preferably in the range of 3/97 to 35/65, still more preferably in the range of 4/96 to 20/80, like in the range of 4/96 to 18/82.

In one preferred embodiment the polypropylene matrix is a mixture of a propylene homopolymer and a random ethylene-propylene copolymer, wherein said random ethylene-propylene copolymer has preferably an ethylene content in the range of 2.1 to 7.0 wt.-%, more preferably in the range of 2.5 to 6.0 wt.-%, like in the range of 3.2 to 5.0 wt.-%, and the weight ratio between the propylene homopolymer and the random ethylene-propylene copolymer is in the range of 3/97 to 40/60, more preferably in the range of 3/97 to 35/65, still more preferably in the range of 4/96 to 20/80, like in the range of 4/96 to 18/82.

Preferably the polypropylene matrix is present in the heterophasic propylene copolymer in an amount of from 80 to 90 wt.-%; more preferably from 83 to 89 wt.-%, based on the total amount of heterophasic propylene copolymer.

Therefore, it is especially preferred that polypropylene matrix is present in the heterophasic propylene copolymer in an amount of from 80 to 90 wt.-%; preferably from 83 to 89 wt.-%, based on the total amount of heterophasic propylene copolymer, and the polypropylene matrix is a mixture of a propylene homopolymer and a random ethylene-propylene copolymer, wherein said random ethylene-propylene copolymer has an ethylene content in the range of 2.1 to 7.0 wt.-%, more preferably in the range of 2.5 to 6.0 wt.-%, like in the range of 3.2 to 5.0 wt.-%, and the weight ratio between the propylene homopolymer and the random ethylene-propylene copolymer is in the range of 3/97 to 40/60, preferably in the range of 3/97 to 35/65, more preferably in the range of 4/96 to 20/80, like in the range of 4/96 to 18/82.

In a preferred embodiment the heterophasic propylene copolymer is obtained by a mixture of two different heterophasic propylene copolymers. Preferably the mixture is obtained by mechanical blending, for instance by using an extruder as known to the skilled person. In particular, it is preferred to use a conventional compounding or blending apparatus, e.g. a Banbury mixer, a 2-roll rubber mill, Buss-co-kneader, single screw extruder, or a twin-screw extruder. More preferably, mixing is accomplished in a co-rotating twin-screw extruder. The heterophasic propylene copolymer recovered from the extruder are usually in the form of pellets or is directly formed into a film. For instance, the two different heterophasic propylene copolymers are pre-mixed and fed to an extruder or separately fed into an extruder and then melt-mixed, preferably in a continuous melt mixing device like a single screw extruder, a co-rotating twin screw extruder or a co-kneader. The barell temperature preferably is in the range of 200 to 300° C. More preferably a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures and fulfilling the following relation: T1<T3<T2. Barell temperature T1 is preferably in the range of 180 to 210° C. Barell temperature T2 (in the kneading zone) preferably is in the range of 230 to 300° C. Barell temperature T3 (in the die zone) preferably is in the range of 250 to 290° C. The screw speed of the melt mixing device preferably is adjusted to a range from 100 to 800 rotations per minute (rpm).

Following the melt-mixing step, the resulting polymer melt is pelletized either in an underwater pelletizer or after solidification of one or more strands in a waterbath in a strand pelletizer.

As mentioned above the two different heterophasic propylene copolymers can be after extrusion directly formed into a film or using pellets of the extruded two different heterophasic propylene copolymers for film making. In such a case it is preferred that the different zones of the extruder are in the temperature range from 180 to 280°C.

More specifically it is preferred that the heterophasic propylene copolymer according to this invention is obtained by mechanical blending a first heterophasic propylene copolymer (HECO) and a second heterophasic propylene copolymer (RAHECO) in a weight ratio of the HECO to the RAHECO (HECO/RAHECO) from 3/96 to 40/60, preferably from 4/96 to 30/70, more preferably from 4/96 to 20/70, wherein the first heterophasic propylene copolymer (HECO) has a matrix being a propylene homopolymer (H-PP) in which a first propylene-ethylene elastomeric copolymer (EPR1) is dispersed and the second heterophasic propylene copolymer (RAHECO) has a matrix being a random ethylene-propylene copolymer (R-PP) having preferably an ethylene content in the range of 2.1 to 7.0 wt.-%, preferably in the range of 2.5 to 6.0 wt.-%, like in the range of 3.2 to 5.0 wt.-%, in which a second propylene-ethylene elastomeric copolymer (EPR2) is dispersed.

It is preferred that the first heterophasic propylene copolymer (HECO) and the second heterophasic propylene copolymer (RAHECO) are the main components of the heterophasic propylene copolymer according to this invention. Hence, it is preferred that the total amount of the first heterophasic propylene copolymer (HECO) and the second heterophasic propylene copolymer (RAHECO) together in the heterophasic propylene copolymer according to this invention is at least 98 wt.-%, preferably the heterophasic propylene copolymer consists of the first heterophasic propylene copolymer (HECO) and the second heterophasic propylene copolymer (RAHECO).

Typically the first heterophasic propylene copolymer (HECO) has a melting temperature (Tm), determined by differential scanning calorimetry (DSC) according to ISO 11357 / part 3 /method C2, in the range from 163 to 169 °C, more preferably in the range of 164 to 169 °C, and/or a crystallization temperature (Tc), determined by differential scanning calorimetry (DSC) according to ISO 11357, in the range from 120 to 140 °C, more preferably in the range from 125 to 135 °C.

On the other hand the second heterophasic propylene copolymer (RAHECO) has typically a melting temperature (Tm), determined by differential scanning calorimetry (DSC) according to ISO 11357, in the range from 130 to 147 °C, preferably from 135 to 146 °C and/or a crystallization temperature (Tc), determined by differential scanning calorimetry (DSC) according to ISO 11357, in the range from 90 to 112 °C, more preferably in the range from 100 to 110 °C.

Preferably the first heterophasic propylene copolymer (HECO) and the second heterophasic propylene copolymer (RAHECO) differ in the melting temperature, determined by differential scanning calorimetry (DSC) according to ISO 11357 / part 3 /method C2, by at least 10 °C, more preferably by at least 15 °C, still more preferably by at least 15 to 30 °C, i.e. by at least 18 to 28 °C, wherein the first heterophasic propylene copolymer (HECO) has a melting temperature (Tm), determined by differential scanning calorimetry (DSC) according to ISO 11357 / part 3 /method C2, in the range from 163 to 169 °C, more preferably in the range of 164 to 169 °C, and the second heterophasic propylene copolymer (RAHECO) has typically a melting temperature (Tm), determined by differential scanning calorimetry (DSC) according to ISO 11357, in the range from 130 to 147 °C, preferably from 135 to 146 °C.

With respect to the previous paragraph, it is additionally preferred that the first heterophasic propylene copolymer (HECO) and a second heterophasic propylene copolymer (RAHECO) differ in the crystallization temperature (Tc), determined by differential scanning calorimetry (DSC) according to ISO 11357, by at least 10 °C, more preferably by at least 15 °C, still more preferably by at least 15 to 28 °C, i.e. by at least 18 to 26 °C, wherein the first heterophasic propylene copolymer (HECO) has a crystallization temperature (Tc), determined by differential scanning calorimetry (DSC) according to ISO 11357, in the range from 120 to 140 °C, more preferably in the range from 125 to 135 °C and the second heterophasic propylene copolymer (RAHECO) has crystallization temperature (Tc), determined by differential scanning calorimetry (DSC) according to ISO 11357, in the range from 90 to 112 °C, more preferably in the range from 100 to 110 °C.

In view of the above differences between the first heterophasic propylene copolymer (HECO) and the second heterophasic propylene copolymer (RAHECO) it is preferred that the first heterophasic propylene copolymer (HECO) having a propylene homopolymer (H-PP) as the matrix in which a first propylene-ethylene elastomeric copolymer (EPR1) is dispersed is further defined by having
(a) a melting temperature (Tm), determined by differential scanning calorimetry (DSC) according to ISO 11357 / part 3 /method C2, in the range from 163 to 169 °C, preferably in the range of 164 to 169 °C;
(b) from 80.0 to 90.0 wt.-%, preferably from 86.5 to 89.0 wt.-%, relative to the total weight of the first heterophasic propylene copolymer (HECO), of a crystalline fraction (CF), determined by CRYSTEX QC analysis;
(c) from 10.0 to 20.0 wt.-%, preferably from 11.0 to 13.5 wt.-%, relative to the total weight of the first heterophasic propylene copolymer (HECO), of a soluble fraction (SF), determined by CRYSTEX QC analysis; wherein
(d) the crystalline fraction (CF) has an ethylene content (C2(CF)), determined by CRYSTEX QC analysis, in the range from 1.0 to 3.2 wt.-%, preferably from 1.5 to 2.8 wt.-%, and an intrinsic viscosity (iV(CF)), determined by CRYSTEX QC analysis, in the range from 2.00 to 3.00 dL/g, preferably from 2.25 to 2.80 dL/g;
(e) the soluble fraction (SF) has an ethylene content (C2(SF)), determined by CRYSTEX QC analysis, in the range from 22.0 to 35.0 wt.-%, preferably from 26.0 to 33.0wt.-%, and an intrinsic viscosity (iV(SF)), determined by CRYSTEX QC analysis, in the range from 1.20 to 2.20 dL/g, preferably from 1.30 to 2.10 dL/g; wherein further
(f) the ratio of the intrinsic viscosity (iV(SF)) to the intrinsic viscosity (iV(CF)) (iV(SF)/iV(CF)) is above 0.73, preferably in the range from 0.74 to 0.80.

More preferably, the first heterophasic propylene copolymer (HECO) having a propylene homopolymer (H-PP) as the matrix in which a first propylene-ethylene elastomeric copolymer (EPR1) is dispersed is further defined by having
(a) a melting temperature (Tm), determined by differential scanning calorimetry (DSC) according to ISO 11357 / part 3 /method C2, in the range from 163 to 169 °C, preferably in the range of 164 to 169 °C;
(b) a crystallization temperature (Tc), determined by differential scanning calorimetry (DSC) according to ISO 11357, in the range from 120 to 140 °C, more preferably in the range from 125 to 135 °C;
(c) from 80.0 to 90.0 wt.-%, preferably from 86.5 to 89.0 wt.-%, relative to the total weight of the first heterophasic propylene copolymer (HECO), of a crystalline fraction (CF), determined by CRYSTEX QC analysis;
(d) from 10.0 to 20.0 wt.-%, preferably from 11.0 to 13.5 wt.-%, relative to the total weight of the first heterophasic propylene copolymer (HECO), of a soluble fraction (SF), determined by CRYSTEX QC analysis;
   wherein
(e) the crystalline fraction (CF) has an ethylene content (C2(CF)), determined by CRYSTEX QC analysis, in the range from 1.0 to 3.2 wt.-%, preferably from 1.5 to 2.8 wt.-%, and an intrinsic viscosity (iV(CF)), determined by CRYSTEX QC analysis, in the range from 2.00 to 3.00 dL/g, preferably from 2.25 to 2.80 dL/g;
(f) the soluble fraction (SF) has an ethylene content (C2(SF)), determined by CRYSTEX QC analysis, in the range from 22.0 to 35.0 wt.-%, preferably from 26.0 to 33.0wt.-%, and an intrinsic viscosity (iV(SF)), determined by CRYSTEX QC analysis, in the range from 1.20 to 2.20 dL/g, preferably from 1.30 to 2.10 dL/g; wherein further
(g) the ratio of the intrinsic viscosity (iV(SF)) to the intrinsic viscosity (iV(CF)) (iV(SF)/iV(CF)) is above 0.73, preferably in the range from 0.74 to 0.80.

More preferably the first heterophasic propylene copolymer (HECO) as defined in the previous paragraph has
(a) an ethylene content in the range from 3.0 to 10.0 wt.-%, preferably in the range from 3.5 to 6.5 wt.-%; and
(b) a melt flow rate (MFR₂), determined according to ISO 1133 at 230 °C and 2.16 kg, in the range from 1.0 to 8.0 g/10 min, preferably in the range of 2.0 to 6.0 g/10 min.

Still more preferably the amount of the matrix of the first heterophasic propylene copolymer (HECO), based on the total amount of the first heterophasic propylene copolymer (HECO), is in the range from 82 to 92 wt.-% and preferably said matrix has a melt flow rate (MFR₂), determined according to ISO 1133 at 230 °C and 2.16 kg, in the range from 1.0 to 5.0 g/10 min, preferably in the range of 1.5 to 4.0 g/10 min.

It is especially preferred that the first heterophasic propylene copolymer (HECO) has been α-nucleated using α-nucleating agents as known by the skilled person and for instance described in H. Zweifel 'Plastics Additives Handbook'6th edition, pages 967 to 988. More preferably the first heterophasic propylene copolymer (HECO) contains polymerized vinyl compounds such as polyvinylcyclohexane (cf. WO 99/24479 and WO 99/24501) as well as norbornane carboxylic acid salt, like Hyperform HPN-68 of Miliken, as α-nucleating agents.

In turn the second heterophasic propylene copolymer (RAHECO) comprising a matrix being a random ethylene-propylene copolymer (R-PP) and a second propylene-ethylene elastomeric copolymer (EPR2), wherein said random ethylene-propylene copolymer (R-PP) has preferably an ethylene content in the range of 2.1 to 7.0 wt.-%, preferably in the range of 2.5 to 6.0 wt.-%, like in the range of 3.2 to 5.0 wt.-%, said second heterophasic propylene copolymer (RAHECO) is preferably further defined by having
(a) a melting temperature (Tm), determined by differential scanning calorimetry (DSC) according to ISO 11357, in the range from 130 to 147 °C, preferably from 135 to 146 °C;
(b) a crystallization temperature (Tc), determined by differential scanning calorimetry (DSC) according to ISO 11357, in the range from 90 to 112 °C, more preferably in the range from 100 to 110 °C;
(c) from 75.0 to 85.0 wt.-%, preferably from 77.0 to 84.0 wt.-%, relative to the total weight of the second heterophasic propylene copolymer (RAHECO), of a crystalline fraction (CF), determined by CRYSTEX QC analysis;
(d) from 15.0 to 25.0 wt.-%, preferably from 16.0 to 23.0 wt.-%, relative to the total weight of the second heterophasic propylene copolymer (RAHECO), of a soluble fraction (SF), determined by CRYSTEX QC analysis; wherein
(e) the crystalline fraction (CF) has an ethylene content (C2(CF)), determined by CRYSTEX QC analysis, in the range from 3.2 to 6.0 wt.-%, preferably from 4.1 to 5.2 wt.-%, and an intrinsic viscosity (iV(CF)), determined by CRYSTEX QC analysis, in the range from 1.50 to 3.00 dL/g, preferably from 1.80 to 2.50 dL/g;
(f) the soluble fraction (SF) has an ethylene content (C2(SF)), determined by CRYSTEX QC analysis, in the range from 22.0 to 35.0 wt.-%, preferably from 26.0 to 34.0 wt.-%, and an intrinsic viscosity (iV(SF)), determined by CRYSTEX QC analysis, in the range from 1.10 to 2.00 dL/g, preferably from 1.20 to 1.80 dL/g; wherein further
(g) the ratio of the intrinsic viscosity (iV(SF)) to the intrinsic viscosity (iV(CF)) (iV(SF)/iV(CF)) is below 0.78, preferably in the range from 0.57 to 0.75.

The second heterophasic propylene copolymer (RAHECO) as defined in the previous paragraph is preferably further defined by having
(a) an ethylene content in the range from 7.0 to 10.0 wt.-%, preferably in the range from 7.5 to 9.5 wt.-%; and
(b) a melt flow rate (MFR₂), determined according to ISO 1133 at 230 °C and 2.16 kg, in the range from 4.0 to 10.0 g/10 min, preferably in the range of 5.0 to 9.0 g/10 min.

Still yet more preferably the matrix of the second heterophasic propylene copolymer (RAHECO), based on the total amount of the second heterophasic propylene copolymer (RAHECO), is in the range from 82 to 92 wt.-%.

In contrast to the first heterophasic propylene copolymer (HECO) the second heterophasic propylene copolymer (RAHECO) is preferably not α-nucleated. The second heterophasic propylene copolymer (RAHECO) can be visbroken with peroxide to adjust the final melt flow rate.

Such visbreaking may be carried out in any known manner, like by using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butylperoxide (DTBP) (for instance sold under the tradenames Trigonox B and Luperox Di), tertbutyl-cumyl-peroxide (BCUP) (for instance sold under the tradenames Trigonox T and Luperox 801), bis (tert.butylperoxy-isopropyl)benzene (DIPP) (for instance sold under the tradenames Perkadox 14S and Luperox DC) and 5-dimethyl-2,5-di-(tert-butylperoxy)-hexane (for instance sold under the tradename Pergaprop HX-10 PP). Suitable amounts of peroxide to be employed in accordance with the present invention are in principle known to the skilled person and can easily be calculated on the basis of the amount of the second heterophasic propylene copolymer (RAHECO) to be subjected to visbreaking, the melt flow rate MFR₂ value of the second heterophasic propylene copolymer (RAHECO) to be subjected to visbreaking and the desired target melt flow rate MFR₂ of the product to be obtained. Accordingly, typical amounts of peroxide visbreaking agent are from 0.005 to 0.7 wt.-%, more preferably from 0.01 to 0.4 wt.-%, based on the total amount of the second heterophasic propylene copolymer (RAHECO) employed.

The first heterophasic propylene copolymer (HECO) and the second heterophasic propylene copolymer (RAHECO) may contain additives as typically used for polypropylene. For instance, both heterophasic propylene copolymers may contain additives preferably selected from pigments, antioxidants, UV-stabilisers, anti-scratch agents, mold release agents, acid scavengers, lubricants, anti-static agents, and mixtures thereof.

The first heterophasic propylene copolymer (HECO) and the second heterophasic propylene copolymer (RAHECO) can be produced as known from the state of the art. It is especially preferred that the first heterophasic propylene copolymer (HECO) and the second heterophasic propylene copolymer (RAHECO) are produced with a catalyst system being phthalate free, more preferably they have been produced with a Ziegler-Natta catalyst being phthalate free, wherein the internal donor is preferably a citraconate or a derivative thereof. A preferred catalyst system is described in WO 2016/066446 A1 to which reference is made. Suitable process conditions are also defined in WO 2016/066446 A1.

The heterophasic propylene copolymer according to this invention is especially suitable for film making. Hence the present invention is additionally directed to a film containing at least one layer, wherein the at least one layer comprises at least 95 wt.-%, preferably consists, of the heterophasic propylene copolymer as defined herein. For making said film cast film technology or blown film technology can be applied. More preferably the film according to this invention is a cast film.

The film according to this invention is especially suitable as packaging material, like for instance as food packaging material.

In the following the invention is described by way of examples.

### EXAMPLES

### 1. Determination methods

The following definitions of terms and determination methods apply for the above general description of the invention including the claims as well as to the below examples unless otherwise defined.

### CRYSTEX QC analysis

### Crystalline and soluble fractions method

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596) The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (iV) an online 2-capillary viscometer is used.

The IR4 detector is a multiple wavelength detector measuring IR absorbance at two different bands (CH₃ stretching vibration (centered at app. 2960 cm⁻¹) and the CH stretching vibration (2700-3000 cm⁻¹) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by ¹³C-NMR) and each at various concentrations, in the range of 2 and 13 mg/ml. To encounter for both features, concentration and ethylene content at the same time for various polymer concentrations expected during CRYSTEX QC analyses the following calibration equations were applied: $\begin{matrix}Conc = a + b * Abs \left(CH\right) + c * {\left(Abs\left(CH\right)\right)}^{2} + d * Abs \left({CH}_{3}\right) + e * \left(Abs{\left({CH}_{3}\right)}^{2}\right. + \\ f * Abs \left(CH\right) * Abs \left({CH}_{3}\right)\end{matrix}$ (Equation 1) $\begin{matrix}{CH}_{3} / 1000 C = a + b * Abs \left(CH\right) + c * Abs \left({CH}_{3}\right) + d * \left(Abs\left({CH}_{3}\right)/Abs\left(CH\right)\right) + e * \\ {\left(Abs\left({CH}_{3}\right)/Abs\left(CH\right)\right)}^{2}\end{matrix}$ (Equation 2)

The constants a to e for equation 1 and a to f for equation 2 were determined by using least square regression analysis.

The CH₃/1000C is converted to the ethylene content in wt.-% using following relationship: $wt . - % \left(Ethylene in EP Copolymers\right) = 100 - {CH}_{3} / 1000 TC * 0.3$ (Equation 3)

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear: $wt . - % XS = 1 , 01 * wt . - % SF$ (Equation 4)

Intrinsic viscosity (iV) of the parent EP copolymer and its soluble and crystalline fractions are determined with a use of an online 2-capillary viscometer and are correlated to corresponding iV's determined by standard method in decalin according to ISO 1628-3. Calibration is achieved with various EP PP copolymers with iV = 2-4 dL/g. The determined calibration curve is linear: $iV \left(dL/g\right) = a * Vsp / c$ (Equation 5)

The samples to be analyzed are weighed out in concentrations of 10mg/ml to 20mg/ml. To avoid injecting possible gels and/or polymers which do not dissolve in TCB at 160 °C, like PET and PA, the weighed out sample was packed into a stainless steel mesh MW 0,077/D 0.05mmm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the iV[dl/g] and the C2[wt.%] of the PP composition. During the second injection the soluble fraction (at low temperature) and the crystalline fraction (at high temperature) with the crystallization cycle are measured (wt.-% SF, wt.-% C2, iV).

### Quantification of microstructure by NMR spectroscopy (for CRYSTEX calibration)

Quantitative nuclear-magnetic resonance (NMR) spectroscopy was used for calibration. Quantitative 13C{1H} NMR spectra were recorded in the solution-state using a Bruker Avance Neo 400 NMR spectrometer operating at 400.15 and 100.62 MHz for 1H and 13C respectively. All spectra were recorded using a 13C optimized 10 mm extended temperature probe head at 125°C using nitrogen gas for all pneumatics. Approximately 200 mg of material was dissolved in approximately 3 ml of 1,2-tetrachloroethane-d2 (TCE-d2) along with approximately 3 mg BHT (2,6-di-tert-butyl-4-methylphenol CAS 128-37-0) and chromium-(III)-acetylacetonate (Cr(acac)3) resulting in a 60 mM solution of relaxation agent in solvent as described in G. Singh, A. Kothari, V. Gupta, Polymer Testing 2009, 28(5), 475.

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bi-level WALTZ16 decoupling scheme as described in Z. Zhou, R. Kuemmerle, X. Qiu, D. Redwine, R. Cong, A. Taha, D. Baugh, B. Winniford, J. Mag. Reson. 187 (2007) 225 and V. Busico, P. Carbonniere, R. Cipullo, C. Pellecchia, J. Severn, G. Talarico, Macromol. Rapid Commun. 2007, 28, 1128. A total of 6144 (6k) transients were acquired per spectra.

Quantitative 13C{1H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed (as described in Cheng, H. N., Macromolecules 1984, 17, 1950) and the comonomer fraction calculated as the fraction of ethylene in the polymer with respect to all monomer in the polymer: $fE = \left(E/\left(P+E\right)\right.$

The comonomer fraction was quantified using the method of W-J. Wang and S. Zhu, Macromolecules 2000, 33 1157, through integration of multiple signals across the whole spectral region in the 13C{1H} spectra. Integral regions were slightly adjusted to increase applicability across the whole range of encountered comonomer contents. The mole percent comonomer incorporation was calculated from the mole fraction: $E \left[mol%\right] = 100 * fE$

The weight percent comonomer incorporation was calculated from the mole fraction: $E \left[wt%\right] = 100 * \left(fE*28.06\right) / \left(\left(fE*28.06\right)+\left(\left(1-fE\right)*42.08\right)\right) .$

### Melt Flow Rate

The melt flow rate (MFR₂) is determined according to ISO 1133 and is indicated in g/10 min. The MFR₂ is an indication of the flowability, and hence the processability, of the polymer. The higher the melt flow rate, the lower the viscosity of the polymer. The MFR₂ of polypropylene is determined at a temperature of 230 °C and a load of 2.16 kg.

**DSC analysis, melting temperature (Tₘ) and heat of fusion (H_{f}), crystallization temperature (T_{c}) and heat of crystallization (H_{c}):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature (T_{c}) and crystallization enthalpy (H_{c}) are determined from the cooling step, while melting temperature (Tₘ) and melting enthalpy (Hₘ) are determined from the second heating step.

### The Flexural Modulus

Flexural modulus was determined according to ISO 178 method A (3-point bending test) on 80 mm × 10 mm × 4 mm specimens. Following the standard, a test speed of 2 mm/min and a span length of 16 times the thickness was used. The testing temperature was 23±2 °C. Injection molding was carried out according to ISO 19069-2.

### Dyna test

The impact strength of films was determined by the Dynatest method according to

ISO 7765-2 at +23 °C on films with a thickness of 50 µm produced as described in the experimental part herein.

The value Etot [J/mm] represents the relative total penetration energy per mm thickness that a film can absorb before it breaks divided by the film thickness. The higher this value the tougher the material.

### Tensile properties (Tensile Modulus, Tensile Strength)

Tensile properties in machine and transverse direction were determined according to ISO 527-3 at 23 °C on films with a thickness of 50 µm produced as described in the experimental part herein. Testing was performed at a cross-head speed of 1 mm/min.

### 2. Synthesis of the Examples

### Synthesis of the first heterophasic propylene copolymer (HECO)

For the polymerization process of the first heterophasic propylene copolymer (HECO), a Ziegler-Natta type catalyst was employed, as used for the inventive examples of WO 2016/066446 A1 and prepolymerized with vinylcyclohexane to achieve α-nucleation due to the presence of poly(vinylcyclohexane).

α-Nucleation by prepolymerization with vinylcyclohexane is described in EP290256 B1 and EP2960279B1 in detail.

### Synthesis of the second heterophasic propylene copolymer (RAHECO)

For the polymerization process of the second heterophasic propylene copolymer (RAHECO), a Ziegler-Natta type catalyst as used for the inventive examples of WO 2016/066446 A1 was employed (without any vinylcyclohexane prepolymerization). That is the second heterophasic propylene copolymer (RAHECO) is not α-nucleated.

Polymerization of both heterophasic propylene copolymers was performed in a Borstar pilot plant, comprising a prepolymerization reactor, a loop reactor and two gas phase reactors. The external donor was di(cyclopentyl) dimethoxy silane (D-donor) while as cocatalyst triethyl-aluminum (TEAL) was used. The polymerization conditions are also indicated in Table 1.

**Table 1: Polymerization conditions**

| | | **RAHECO (CE1)** | **HECO (CE5)** |
|---|---|---|---|
| **Prepolymerization** | | | |
| [Co]/[ED] | [mol/mol] | 10 | 8.0 |
| [Co]/[Ti] | [mol/mol] | 220 | 173 |
| Temperature | [°C] | 25 | 30 |
| Residence time | [min] | 15 | 15 |

| **Loop reactor** | | | |
|---|---|---|---|
| Temperature | [°C] | 75 | 80 |
| Split | [wt.-%] | 35 | 39 |
| H2/C3 | [mol/kmol] | 1.0 | 0.6 |
| C2/C3 | [mol/kmol] | 4.5 | 0.0 |
| MFR₂ | [g/10 min] | 3.7 | 3.2 |
| C2 | [wt-%] | 2.5 | 0.0 |

| **1^{st} Gas phase reactor** | | | |
|---|---|---|---|
| Temperature | [°C] | 80 | 80 |
| Split | [wt.-%] | 52 | 50 |
| H2/C3 | [mol/kmol] | 9.8 | 4.7 |
| C2/C3 | [mol/kmol] | 28.1 | 0.0 |
| MFR₂ | [g/10 min] | 3.8 | 2.8 |
| XCS | [wt.-%] | 7.5 | 1.8 |
| C2 | [wt.-%] | 4.0 | 0.0 |

| **2^{nd} Gas phase reactor** | | | |
|---|---|---|---|
| Temperature | [°C] | 75 | 75 |
| Split | [wt.-%] | 13 | 11 |
| H2/C2 | [mol/kmol] | 530 | 340 |
| C2/C3 | [mol/kmol] | 400 | 250 |
| MFR₂ | [g/10 min] | 3.8 | 3.0 |

| **Final Properties (pellet)** | | | |
|---|---|---|---|
| MFR₂ | [g/10 min] | 7.0 | 3.0 |
| C2 | [wt.-%] | 8.3 | 5.0 |
| SF | [wt.-%] | 18.2 | 11.5 |
| C2(SF) | [wt.-%] | 27.1 | 30.6 |
| iV(SF) | [dL/g] | 1.43 | 1.91 |
| CF | [wt.-%] | 81.8 | 88.5 |
| C2(CF) | [wt.-%] | 4.4 | 2.0 |
| iV(total) | [dL/g] | 2.03 | 2.42 |
| iV(CF) | [dL/g] | 2.10 | 2.44 |
| iV(SF)/iV(CF) | [-] | 0.68 | 0.78 |
| Tc | [°C] | 107 | 129.7 |
| Tm | [°C] | 144 | 168 |
| Flexural Modulus | [MPa] | 647 | 1492 |

### Compounding:

The second heterophasic propylene copolymer 'RAHECO' powder described in Table 1 was mixed with 486 ppm of the antioxidant 'Irganox 1010', 975 ppm of the secondary antioxidant 'Irgafos 168', 439 ppm of the acid scavenger 'DHT-4A', and 3500 ppm of the dialkyl peroxide masterbatch 'Pergaprop HX-1 PP' (Pergan GmbH), the mixture was compounded on a ZSK 57 twin screw extruder, with a melt temperature of 195°C, and a production rate of 100 kg/h. The final blend has a melt flow rate MFR₂ of 7.0 g/10min. The further properties are given in Table 1 (Final Properties (pellet)).

The first heterophasic propylene copolymer 'HECO' powder described in Table 1 was mixed with 501 ppm of the antioxidant 'Irganox 1010', 1000.5 ppm of the secondary antioxidant 'Irgafos 168', 299 ppm of the acid scavenger 'DHT-4A', and 499 ppm of the α-nucleating agent 'HPN20E', the mixture was compounded on a ZSK 57 twin screw extruder, with a melt temperature of 195°C, and a production rate of 100kg/h. The final blend has a melt flow rate MFR₂ of 3.0 g/10min. The further properties are given in Table 1 (Final Properties (pellet)).

Blends of the first heterophasic propylene copolymer 'HECO' and the second heterophasic propylene copolymer 'RAHECO' were prepared by mechanical blending in the ratios indicated in Table 2. The blending was done directly on SML cast film semicommercial line. The melt temperature is 259°C, production rate is 150 kg/h, chill roll temperature is 20°C, take off speed 47.8 m/min, end up with a final film thickness of 50 µm. To detect the basic properties of the blends, the CRYSTEC/DSC were done on these cast film and results are shown in Table 2.

**Table 2: Data of the examples (Cast film)**

| | | Ex1 | Ex2 | Ex3 | CE2 | CE3 | CE4 |
|---|---|---|---|---|---|---|---|
| RAHECO | [wt.-%] | 95 | 85 | 70 | 30 | - | - |
| HECO | [wt.-%] | 5 | 15 | 30 | 70 | - | - |
| com HECO¹ | [wt.-%] | - | - | - | - | - | 100 |
| com RAHECO² | [wt.-%] | - | - | - | - | 100 | - |
| Matrix | [wt.-%] | 87.1 | 87.3 | 87.6 | 88.4 | 85 | 88 |
| C2 Matrix | [wt.-%] | 3.8 | 3.4 | 2.8 | 1.2 | 4.0 | 0.0 |
| H-PP in Matrix | [wt.-%] | 5.1 | 15.3 | 30.5 | 70.5 | 0.0 | 100.0 |
| R-PP in Matrix | [wt.-%] | 94.9 | 84.7 | 69.5 | 29.5 | 100 | 0.0 |
| Rubber | [wt.-%] | 12.9 | 12.7 | 12.4 | 11.6 | 15 | 12 |
| MFR | [g/10min] | 6.7 | 6.2 | 5.4 | 3.9 | 3.9 | 1.1 |
| Tc | [°C] | 118.1 | 122.5 | 125.9 | 129.5 | 99 | 113 |
| Tm | [°C] | 150.7 | 155.8 | 160.2 | 165.3 | 142 | 165 |
| SF | [wt.-%] | 17.35 | 16.81 | 16.37 | 13.78 | 17.6 | 15.5 |
| CF | [wt.-%] | 82.65 | 83.19 | 83.63 | 86.22 | 82.4 | 84.5 |
| C2 total | [wt.-%] | 8.0 | 7.6 | 7.6 | 5.6 | 7.9 | 8.1 |
| C2(SF) | [wt.-%] | 25.89 | 27.59 | 27.23 | 27.44 | 28.8 | 38.1 |
| C2(CF) | [wt.-%] | 3.91 | 3.78 | 3.39 | 2.31 | 4.0 | 2.43 |
| iV (total) | [dL/g] | 1.89 | 1.93 | 2.02 | 2.19 | 2.29 | 2.99 |
| iV(SF) | [dL/g] | 1.21 | 1.29 | 1.38 | 1.63 | 1.55 | 1.63 |
| iV(CF) | [dL/g] | 1.99 | 2.02 | 2.09 | 2.21 | 2.37 | 3.17 |
| iV(SF)/iV(CF) | [-] | 0.61 | 0.64 | 0.66 | 0.74 | 0.65 | 0.51 |
| ¹ commercial heterophasic propylene copolymer having a propylene homopolymer matrix | | | | | | | |
| ² commercial heterophasic propylene copolymer having a random propylene ethylene copolymer matrix | | | | | | | |

From the above examples 50 µm thick monolayer films were produced on a SML cast film line.

**Table 3: Properties of the films**

| | Melt pressure* | Et (TD) | Et (MD) | σm (TD) | σm (MD) | Etot on thickness 23 °C |
|---|---|---|---|---|---|---|
| | [Bar] | [MPa] | [MPa] | [MPa] | [MPa] | [J/mm] |
| IE1 | 102 | 355 | 374 | 36 | 50 | 38.2 |
| IE2 | 106 | 385 | 399 | 36 | 51 | 39.55 |
| IE3 | 112 | 491 | 520 | 15 | 17 | 17.88 |
| CE1 (RAHECO) | 100 | 338 | 352 | 35 | 51 | 38.95 |
| CE2 | 127 | 825 | 891 | 21 | 24 | 10.66 |
| CE3 (com RAHECO) | 136 | 367 | 362 | 37 | 58 | 24.08 |
| CE4 (com HECO) | 182 | 527 | 576 | 33 | 66 | 16.52 |
| CE5 (HECO) | 139 | 1049 | 1140 | 40 | 69 | 9.83 |
| * melt pressure before the filter on the extruder | | | | | | |
| "Et" tensile modulus | | | | | | |
| "σm" tensile strength | | | | | | |
| "Etot" Puncture resistance | | | | | | |

The data show that the stiffness of the inventive examples is improved compared to comparative example 'CE1' by keeping tensile strength and puncture resistance on a high level which allows downgauging. Further when comparing inventive example 'IE1' with comparative example 'CE3' it can be seen that the melt pressure before the extruder can be reduced, which is a further advantage of the invention.

## Claims

1. Heterophasic propylene copolymer having
(a) a melting temperature (Tm), determined by differential scanning calorimetry (DSC) according to ISO 11357, in the range from 148 to 162 °C, preferably 149 to 161 °C;
(b) from 75.0 to 86.0 wt.-%, preferably from 81.0 to 85.0 wt.-%, relative to the total weight of the heterophasic propylene copolymer, of a crystalline fraction (CF), determined by CRYSTEX QC analysis;
(c) from 14.0 to 25.0 wt.-%, preferably from 15.0 to 19.0 wt.-%, relative to the total weight of the heterophasic propylene copolymer, of a soluble fraction (SF), determined by CRYSTEX QC analysis;
wherein
(d) the crystalline fraction (CF) has an ethylene content (C2(CF)), determined by CRYSTEX QC analysis, in the range from 2.4 to 4.2 wt.-%, preferably from 3.2 to 4.0 wt.-%, and an intrinsic viscosity (iV(CF)), determined by CRYSTEX QC analysis, in the range from 1.70 to 2.20 dL/g, preferably from 1.85 to 2.15 dL/g;
(e) the soluble fraction (SF) has an ethylene content (C2(SF)), determined by CRYSTEX QC analysis, in the range from 18.0 to 29.0 wt.-%, preferably from 22.0 to 29.0wt.-%, and an intrinsic viscosity (iV(SF)), determined by CRYSTEX QC analysis, in the range from 1.10 to 1.90 dL/g, preferably from 1.15 to 1.70 dL/g dL/g;
wherein further
(f) the ratio of the intrinsic viscosity (iV(SF)) to the intrinsic viscosity (iV(CF)) (iV(SF)/iV(CF)) is below 0.72, preferably in the range from 0.55 to below 0.67.

2. Heterophasic propylene copolymer according to claim 1 having
(a) an ethylene content in the range of 6.0 to 10.0 wt.-%, preferably in the range of 6.5 to 8.1 wt.-%, the polymer chains of the heterophasic propylene copolymer exclusively contain units derivable from propylene and optionally ethylene and/or
(b) a melt flow rate MFR₂ of at least 2.0, preferably in the range of 2.0 to 12 g/10min, more preferably in the range of 3.0 to 10.0 g/10min.

3. Heterophasic propylene copolymer according to claim 1 or 2 having a crystallization temperature (Tc), determined by differential scanning calorimetry (DSC) according to ISO 11357, in the range from 115 to 128 °C, preferably in the range from 116 to 127 °C.

4. Heterophasic propylene copolymer according to any preceding claims comprising a polypropylene matrix in which a propylene-ethylene elastomeric copolymer is dispersed, wherein the polypropylene matrix preferably has an ethylene content in the range of 2.0 to 3.9 wt.-%, preferably the matrix is a mixture of a propylene homopolymer and a random ethylene-propylene copolymer, said random ethylene-propylene copolymer having an ethylene content in the range of 2.1 to 7.0 wt.-%, preferably in the range of 2.5 to 6.0 wt.-%.

5. Heterophasic propylene copolymer according to claim 4, wherein
(a) the amount of the polypropylene matrix, based on the total amount of heterophasic propylene copolymer, is in the range from 80 to 90 wt.-%; and/or, preferably and,
(b) the weight ratio of the propylene homopolymer and the random ethylene-propylene copolymer is in the range of 3/97 to 40/60.

6. Heterophasic propylene copolymer according to any preceding claims being obtained by mechanical blending a first heterophasic propylene copolymer (HECO) and a second heterophasic propylene copolymer (RAHECO) in a weight ratio of the HECO to the RAHECO (HECO/RAHECO) from 3/96 to 40/60, preferably from 4/96 to 30/70, wherein the first heterophasic propylene copolymer (HECO) has a matrix being a propylene homopolmyer (H-PP) in which a first propylene-ethylene elastomeric copolymer (EPR1) is dispersed and the second heterophasic propylene copolymer (RAHECO) has a matrix being a random ethylene-propylene copolymer (R-PP) having an ethylene content in the range of 2.1 to 7.0 wt.-%, preferably in the range of 2.5 to 6.0 wt.-%, in which a second propylene-ethylene elastomeric copolymer (EPR2) is dispersed.

7. Heterophasic propylene copolymer according to claim 6 wherein the first heterophasic propylene copolymer (HECO) has
(a) a melting temperature (Tm), determined by differential scanning calorimetry (DSC) according to ISO 11357 / part 3 /method C2, in the range from 163 to 169 °C;
(b) preferably a crystallization temperature (Tc), determined by differential scanning calorimetry (DSC) according to ISO 11357, in the range from 120 to 140 °C, more preferably in the range from 125 to 135 °C;
(c) from 80.0 to 90.0 wt.-%, preferably from 86.5 to 89.0 wt.-%, relative to the total weight of the first heterophasic propylene copolymer (HECO), of a crystalline fraction (CF), determined by CRYSTEX QC analysis;
(d) from 10.0 to 20.0 wt.-%, preferably from 11.0 to 13.5 wt.-%, relative to the total weight of the first heterophasic propylene copolymer (HECO), of a soluble fraction (SF), determined by CRYSTEX QC analysis;
wherein
(e) the crystalline fraction (CF) has an ethylene content (C2(CF)), determined by CRYSTEX QC analysis, in the range from 1.0 to 3.0 wt.-%, preferably from 1.5 to 2.8 wt.-%, and an intrinsic viscosity (iV(CF)), determined by CRYSTEX QC analysis, in the range from 2.00 to 3.00 dL/g, preferably from 2.25 to 2.80 dL/g;
(f) the soluble fraction (SF) has an ethylene content (C2(SF)), determined by CRYSTEX QC analysis, in the range from 22.0 to 35.0 wt.-%, preferably from 26.0 to 33.0wt.-%, and an intrinsic viscosity (iV(SF)), determined by CRYSTEX QC analysis, in the range from 1.20 to 2.20 dL/g, preferably from 1.30 to 2.10 dL/g;
wherein further
(g) the ratio of the intrinsic viscosity (iV(SF)) to the intrinsic viscosity (iV(CF)) (iV(SF)/iV(CF)) is above 0.73, preferably in the range from 0.74 to 0.80.

8. Heterophasic propylene copolymer according to claim 6 or 7 wherein the first heterophasic propylene copolymer (HECO) has
(c) an ethylene content in the range from 3.0 to 10.0 wt.-%, preferably in the range from 3.5 to 6.5 wt.-%; and
(d) a melt flow rate (MFR₂), determined according to ISO 1133 at 230 °C and 2.16 kg, in the range from 1.0 to 8.0 g/10 min, preferably in the range of 2.0 to 6.0 g/10 min.

9. Heterophasic propylene copolymer according to according to any of the preceding claims 6 to 8, wherein amount of the matrix of the first heterophasic propylene copolymer (HECO), based on the total amount of the first heterophasic propylene copolymer (HECO), is in the range from 82 to 92 wt.-% and preferably the matrix has a melt flow rate (MFR₂), determined according to ISO 1133 at 230 °C and 2.16 kg, in the range from 1.0 to 5.0 g/10 min, preferably in the range of 1.5 to 4.0 g/10 min.

10. Heterophasic propylene copolymer according to according to any of the preceding claims 6 to 9 wherein the second heterophasic propylene copolymer (RAHECO) has
(h) a melting temperature (Tm), determined by differential scanning calorimetry (DSC) according to ISO 11357, in the range from 130 to 147 °C, preferably from 135 to 146 °C;
(i) a crystallization temperature (Tc), determined by differential scanning calorimetry (DSC) according to ISO 11357, in the range from 90 to 112 °C, more preferably in the range from 100 to 110 °C;
(j) from 75.0 to 85.0 wt.-%, preferably from 77.0 to 84.0 wt.-%, relative to the total weight of the second heterophasic propylene copolymer (RAHECO), of a crystalline fraction (CF), determined by CRYSTEX QC analysis;
(k) from 15.0 to 25.0 wt.-%, preferably from 16.0 to 23.0 wt.-%, relative to the total weight of the second heterophasic propylene copolymer (RAHECO), of a soluble fraction (SF), determined by CRYSTEX QC analysis; wherein
(l) the crystalline fraction (CF) has an ethylene content (C2(CF)), determined by CRYSTEX QC analysis, in the range from 3.2 to 6.0 wt.-%, preferably from 4.1 to 5.2 wt.-%, and an intrinsic viscosity (iV(CF)), determined by CRYSTEX QC analysis, in the range from 1.50 to 3.00 dL/g, preferably from 1.80 to 2.50 dL/g;
(m) the soluble fraction (SF) has an ethylene content (C2(SF)), determined by CRYSTEX QC analysis, in the range from 22.0 to 35.0 wt.-%, preferably from 26.0 to 34.0wt.-%, and an intrinsic viscosity (iV(SF)), determined by CRYSTEX QC analysis, in the range from 1.10 to 2.00 dL/g, preferably from 1.20 to 1.80 dL/g;
wherein further
(n) the ratio of the intrinsic viscosity (iV(SF)) to the intrinsic viscosity (iV(CF)) (iV(SF)/iV(CF)) is below 0.78, preferably in the range from 0.57 to 0.75.

11. Heterophasic propylene copolymer according to claim 6 or 10 wherein the second heterophasic propylene copolymer (RAHECO) has
• an ethylene content in the range from 7.0 to 10.0 wt.-%, preferably in the range from 7.5 to 9.5 wt.-%; and
• a melt flow rate (MFR₂), determined according to ISO 1133 at 230 °C and 2.16 kg, in the range from 4.0 to 10.0 g/10 min, preferably in the range of 5.0 to 9.0 g/10 min.

12. Heterophasic propylene copolymer according to claim 6, 10 or 11, wherein an amount of the matrix of the second heterophasic propylene copolymer (RAHECO), based on the total amount of the second heterophasic propylene copolymer (RAHECO), is in the range from 82 to 92 wt.-% and preferably the matrix has a melt flow rate (MFR₂), determined according to ISO 1133 at 230 °C and 2.16 kg, in the range from 5.0 to 15.0 g/10 min, preferably in the range of 5.0 to 10.0 g/10 min.

13. Heterophasic propylene copolymer according to according to any of the preceding claims 6 to 12 wherein the total amount of the first heterophasic propylene copolymer (HECO) and the second heterophasic propylene copolymer (RAHECO) together in the heterophasic propylene copolymer is at least 98 wt.-%, preferably the heterophasic propylene copolymer consists of the first heterophasic propylene copolymer (HECO) and the second heterophasic propylene copolymer (RAHECO).

14. Heterophasic propylene copolymer according to according to any of the preceding claims 6 to 13, wherein the first heterophasic propylene copolymer (HECO) is α-nucleated and/or wherein the first heterophasic propylene copolymer (HECO) and the second heterophasic propylene copolymer (RAHECO) have been produced with a Ziegler-Natta catalyst being phthalate free, wherein the internal donor is preferably a citraconate or a derivative thereof.

15. **Film** comprising at least one layer comprising at least 95 wt.-% of the heterophasic propylene copolymer according to any of the preceding claims, preferably the at least one layer consists of the heterophasic propylene copolymer according to any of the preceding claims.
